(19) Europäisches Patentamt
European Patent Office
Office européen des brevets

(11) **EP 2 966 769 B1**

(12) # EUROPÄISCHE PATENTSCHRIFT

(45) Veröffentlichungstag und Bekanntmachung des Hinweises auf die Patenterteilung:
**26.01.2022 Patentblatt 2022/04**

(21) Anmeldenummer: **14176558.6**

(22) Anmeldetag: **10.07.2014**

(51) Internationale Patentklassifikation (IPC):
**H02M 7/483** [(2007.01)]

(52) Gemeinsame Patentklassifikation (CPC):
**H02M 7/483**

(54) **Betrieb eines modularen Multilevelstromrichters**

Operation of a modular multi level power converter

Fonctionnement d'un convertisseur multi-étagé modulaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.01.2016 Patentblatt 2016/02**

(73) Patentinhaber: **Siemens Aktiengesellschaft 80333 München (DE)**

(72) Erfinder:
• **Bärnklau, Hans**
**01159 Dresden (DE)**
• **Gensior, Albrecht**
**01277 Dresden (DE)**
• **Bernet, Steffen**
**01454 Radeberg (OT Ullersdorf) (DE)**

(56) Entgegenhaltungen:
**CN-U- 203 562 987    US-A1- 2014 078 796**

• **MERLIN M M C ET AL: "A New Hybrid Multi-Level Voltage-Source Converter with DC Fault Blocking Capability", INTERNATIONAL CONFERENCE ON AC AND DC POWER TRANSMISSION.(ACDC 2010), XX, XX, no. 9TH, 19 October 2010 (2010-10-19), pages 1-5, XP002675791, ISBN: 978-1-84919-308-5**
• **SAEEDIFARD M ET AL: "Dynamic Performance of a Modular Multilevel Back-to-Back HVDC System", IEEE TRANSACTIONS ON POWER DELIVERY, IEEE SERVICE CENTER, NEW YORK, NY, US, vol. 25, no. 4, 1 October 2010 (2010-10-01), pages 2903-2912, XP011317836, ISSN: 0885-8977**

• **WANG CAN ET AL: "Protecting modular multilevel converters (MMC) against ac fault by deadbeat control", 2013 IEEE PES ASIA-PACIFIC POWER AND ENERGY ENGINEERING CONFERENCE (APPEEC), IEEE, 8 December 2013 (2013-12-08), pages 1-6, XP032606904, DOI: 10.1109/APPEEC.2013.6837170 [retrieved on 2014-06-16]**
• **BORDIGNON PAOLO ET AL: "Modular multilevel converter in HVDC systems under fault conditions", 2013 15TH EUROPEAN CONFERENCE ON POWER ELECTRONICS AND APPLICATIONS (EPE), IEEE, 2 September 2013 (2013-09-02), pages 1-10, XP032505222, DOI: 10.1109/EPE.2013.6634467 [retrieved on 2013-10-16]**
• **BALJIT S RIAR ET AL: "Model Predictive Direct Current Control of Modular Multi-level Converters", INDUSTRIAL TECHNOLOGY (ICIT), 2013 IEEE INTERNATIONAL CONFERENCE ON, IEEE, 25 February 2013 (2013-02-25), pages 582-587, XP032377162, DOI: 10.1109/ICIT.2013.6505736 ISBN: 978-1-4673-4567-5**
• **SHI XIAOJIE ET AL: "Modular multilevel converters with integrated arm inductors for high quality current waveforms", 2013 IEEE ECCE ASIA DOWNUNDER, IEEE, 3 June 2013 (2013-06-03), pages 636-642, XP032475454, DOI: 10.1109/ECCE-ASIA.2013.6579166 ISBN: 978-1-4799-0483-9 [retrieved on 2013-08-13]**

- **LEI MING ET AL: "A new circulating-current restraining method for modular multilevel converter", 2013 IEEE ECCE ASIA DOWNUNDER, IEEE, 3 June 2013 (2013-06-03), pages 930-935, XP032475358, DOI: 10.1109/ECCE-ASIA.2013.6579217 ISBN: 978-1-4799-0483-9 [retrieved on 2013-08-13]**
- **ANANDARUP DAS ET AL: "A Pulse Width Modulation technique for reducing switching frequency for modular multilevel converter", POWER ELECTRONICS (IICPE), 2010 INDIA INTERNATIONAL CONFERENCE ON, IEEE, 28 January 2011 (2011-01-28), pages 1-6, XP031929665, DOI: 10.1109/IICPE.2011.5728082 ISBN: 978-1-4244-7883-5**

**Beschreibung**

Die Erfindung betrifft ein Verfahren zum Betrieb eines modularen Multilevelstromrichters, der für jede Phase mehrere elektrisch in Reihe geschaltete Stromrichtermodule aufweist, die jeweils ein Energiespeicherelement zur Speicherung elektrischer Energie aufweisen.

So genannte Multilevelstromrichter können an ihren ausgangsseitigen Anschlussklemmen Spannungen mit geringem Oberschwingungsgehalt erzeugen. Eine relativ neue Topologie ist ein so genannter modularer Multilevelstromrichter, der auch als M2C, MMC oder M2LC bezeichnet wird. Ein wesentliches Merkmal eines modularen Multilevelstromrichters ist die Reihenschaltung mehrerer Stromrichtermodule, die auch als Submodule bezeichnet werden. Für die Funktionsweise eines modularen Multilevelstromrichters ist es notwendig, dass jedes dieser Stromrichtermodule einen Energiespeicher, welcher als Gleichspannungskondensator realisiert werden kann, besitzt. Einige der wesentlichen Vorteile modularer Multilevelstromrichter sind oberschwingungsarme Ausgangsspannungen, ein streng modularer Aufbau, die Möglichkeit, modulare Multilevelstromrichter an Standardtransformatoren oder transformatorlos zu betreiben, eine hohe Verfügbarkeit durch Redundanz und die Möglichkeit, auch bei Hochspannungs- oder Mittelspannungsanwendungen Niederspannungsbauelemente einzusetzen.

Untersuchungen haben ergeben, dass der Kondensatoraufwand bei modularen Multilevelstromrichtern gegenüber "klassischen Mehrpunktstromrichtern" deutlich erhöht ist. Dies wirkt sich insbesondere bei vielen Mittelspannungsanwendungen nachteilig aus, da mit einem erhöhten Kondensatoraufwand im Allgemeinen ein erhöhter konstruktiver Aufwand, insbesondere eine Erhöhung des mechanischen Aufwands, der Baugröße und der Sicherheitsanforderungen, aber auch erhöhte Kosten verbunden sind.

US 2014/0078796 A1 offenbart eine Stromrichtervorrichtung mit mehreren Stromrichtereinheiten, die jeweils wenigstens ein Energiespeicherelement und wenigstens ein Schaltelement, das eine Ausgabe in Abhängigkeit von einer Spannung des Energiespeicherelements steuert, aufweist.

Die Veröffentlichung XP002675791 von Merlin M.M.C. et Al mit dem Titel "A New Hybrid Multi-Level Voltage-Source Converter with DC Fault Blocking Capability", aus dem Tagungsband der "INTERNATIONAL CONFERENCE ON AC AND DC POWER TRANSMISSION" vom 19.10.2019, offenbart einen fehlertoleranten, modularen Mehrstufen-Stromrichter, bei dem die absichtliche Überlagerung einer dritten Stromharmonischen nicht nur die Stromform und das Frequenzspektrum des Laststroms beeinflusst, sondern auch Stromwelligkeiten sechsfacher Grundfrequenz unterdrückt.

Der Erfindung liegt die Aufgabe zugrunde, ein verbessertes Verfahren zum Betrieb eines modularen Multilevelstromrichters anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Die Erfindung nutzt aus, dass, wie unten näher erklärt wird, die Form eines Fehlerstroms, der hier ein Laststrom einer von einem Fehler betroffenen Phase des Multilevelstromrichters ist, erheblichen Einfluss auf den zeitlichen Verlauf der in einem Energiespeicher eines Stromrichtermoduls gespeicherten Energie hat. Daher kann durch die Regelung und/oder Steuerung derartiger Fehlerströme die von den Energiespeichern gespeicherte Energie beeinflusst werden. Insbesondere kann die von den Energiespeichern gespeicherte Energie durch geeignete Regelung und/oder Steuerung der Fehlerströme reduziert werden. Dies ermöglicht vorteilhaft eine Reduzierung des Kondensatoraufwands eines modularen Multilevelstromrichters, da aufgrund geringerer von den Energiespeichern zu speichernder Energie auch die dazu erforderlichen Kapazitätswerte von Kondensatoren der Energiespeicher reduziert werden können. Ein reduzierter Kondensatoraufwand ermöglicht wiederum vorteilhaft eine Verringerung der Baugröße des modularen Multilevelstromrichters, da der Kondensatoraufwand die Baugröße wesentlich beeinflusst. Gleichzeitig werden die Kosten sowie der mechanische und konstruktive Aufwand für die Realisierung eines modularen Multilevelstromrichters vorteilhaft verringert. Ferner ermöglicht die Erfindung, durch die Regelung und/oder Steuerung der Fehlerströme auch eine Dimensionierung ausgangsseitiger Drosseln und/oder den Halbleiteraufwand des modularen Multilevelstromrichters sowie eine Gleichtaktbelastung einer an den modularen Multilevelstromrichter angeschlossenen Last zu reduzieren.

Eine Ausgestaltung der Erfindung sieht vor, dass bei der Regelung und/oder Steuerung wenigstens eines Laststroms einer von dem Fehler betroffenen Phase eine Stromform und/oder eine Frequenz und/oder ein Frequenzspektrum des Laststroms geändert werden.

Diese Ausgestaltung nutzt vorteilhaft aus, dass die von Energiespeichern der Stromrichtermodule zu speichernde Energie insbesondere von der Stromform, Frequenz und dem Frequenzspektrum der Lastströme beeinflussbar sind, wie ebenfalls unten näher erklärt wird.

Eine weitere Ausgestaltung der Erfindung sieht vor, dass ausgangsseitigen Anschlussklemmen der Phasen des Multilevelstromrichters jeweils eine Ausgangsdrossel vorgeschaltet wird und/oder Zweigdrosseln wenigstens einer Phase des Multilevelstromrichters magnetisch gekoppelt sind.

Derartige Ausgangsdrosseln und/oder magnetisch gekoppelte Zweigdrosseln bewirken einen lastseitigen Spannungsabfall, durch den die in den Energiespeichern der Stromrichtermodule gespeicherte Energien zusätzlich beeinflusst und insbesondere reduziert werden können, so dass der Kondensatoraufwand des modularen Multilevelstromrichters weiter reduziert werden kann.

Eine weitere Ausgestaltung der Erfindung sieht vor, dass in einem Fehlerfall eine Energieverteilung in den Energiespeichern der Stromrichtermodule durch eine Aussteuerung einer Gleichtaktspannung und/oder interner elektrischer Ströme ("Kreisströme") des Multilevelstromrichters beeinflusst wird. Vorzugsweise wird dabei im Fehlerfall ein zeitlicher Verlauf der Gleichtaktspannung gegenüber einem Normalbetrieb des Multilevelstromrichters geändert. Insbesondere kann ein Betragsmaximum der Gleichtaktspannung erhöht und/oder eine Periodendauer der Gleichtaktspannung reduziert werden und/oder eine Spannungsform der Gleichtaktspannung geändert werden.

Durch eine derartige Verteilung von Energie auf die Energiespeicher der Stromrichtermodule kann die in den einzelnen Energiespeichern zu speichernde Energie reduziert werden, so dass der Kondensatoraufwand des modularen Multilevelstromrichters vorteilhaft weiter reduziert werden kann.

Eine weitere Ausgestaltung der Erfindung sieht vor, dass in einem Fehlerfall elektrische Energie aus dem Multilevelstromrichter, insbesondere periodisch, in ein Gleichstromnetz zurückgespeist wird.

Durch die Rückspeisung elektrischer Energie aus dem Multilevelstromrichter in ein Gleichstromnetz wird vorteilhaft die von den Energiespeichern der Stromrichtermodule zu speichernde Energie reduziert, so dass der Kondensatoraufwand des modularen Multilevelstromrichters vorteilhaft weiter reduziert werden kann.

Eine weitere Ausgestaltung der Erfindung sieht vor, dass die Stromrichtermodule in einem Normalbetrieb redundant betrieben werden, so dass je Phasenzweig des Multilevelstromrichters immer wenigstens ein Stromrichtermodul nicht betrieben wird, und dass in einem Fehlerfall bedarfsweise wenigstens ein vorher nicht betriebenes Stromrichtermodul zur Energiespeicherung zugeschaltet wird.

Dies ermöglicht vorteilhaft redundante Stromrichtermodule zu nutzen, um im Fehlerfall bedarfsweise die von den einzelnen Energiespeichern der Stromrichtermodule zu speichernde Energie zu reduzieren.

Die Erfindung richtet sich insbesondere auf modulare Multilevelstromrichter mit wenigstens einem Energiespeicher, der wenigstens einen Kondensator umfasst, und auf einen als Kurzschluss ausgebildeten Fehlerfall.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    ein Blockschaltbild eines ersten Ausführungsbeispiels eines dreiphasigen modularen Multilevelstromrichters,
FIG 2    ein Blockschaltbild eines zweiten Ausführungsbeispiels eines dreiphasigen modularen Multilevelstromrichters,
FIG 3    ein Blockschaltbild eines Stromrichtermoduls,
FIG 4    eine Verwendung eines modularen Multilevelstromrichters zur Speisung eines dreiphasigen Inselnetzes,
FIG 5    Verläufe einer normierten Energieschwankung in einem Energiespeicher in Abhängigkeit von einem Lastwinkel für verschiedene Werte einer normierten Lastspannung,
FIG 6    erste Verläufe von Lastströmen in Abhängigkeit von einer Zeit vor und nach einem dreiphasigen Kurzschluss, und
FIG 7    zweite Verläufe von Lastströmen in Abhängigkeit von einer Zeit vor und nach einem dreiphasigen Kurzschluss.

Einander entsprechende Teile sind in allen Figuren mit den gleichen Bezugzeichen versehen.

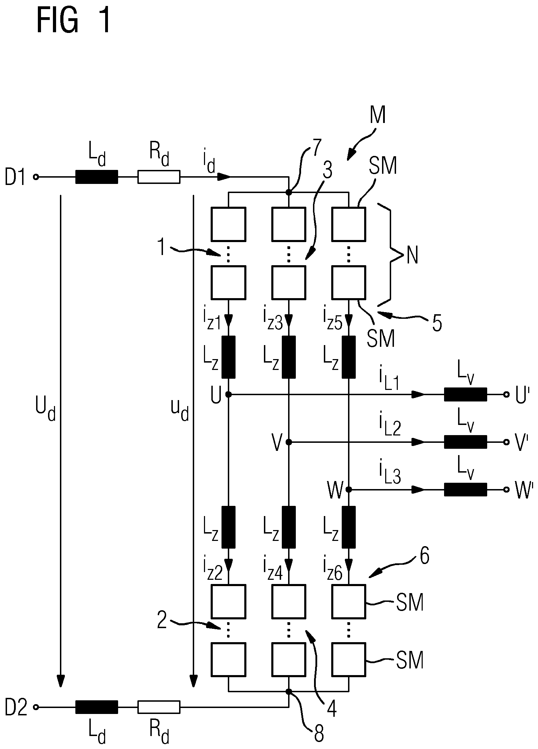

FIG 1 zeigt ein Blockschaltbild eines ersten Ausführungsbeispiels eines dreiphasigen modularen Multilevelstromrichters M.

Der modulare Multilevelstromrichter M weist zwei eingangsseitige (= gleichstromseitige) Anschlussklemmen D1, D2 zu einem Gleichspannungszwischenkreis auf, zwischen denen im Betrieb des modularen Multilevelstromrichters M eine Gleichspannung $U_d$ anliegt. Jede eingangsseitige Anschlussklemme D1, D2 ist mit jeweils einer internen Gleichspannungsklemme 7, 8 verbunden, wobei zwischen die Anschlussklemme D1, D2 und die interne Gleichspannungsklemme 7, 8 optional jeweils eine Eingangsdrossel $L_d$ und ein Eingangswiderstand $R_d$ geschaltet sein kann, so dass zwischen den internen Gleichspannungsklemmen 7, 8 im Betrieb des modularen Multilevelstromrichters M eine interne Gleichspannung $U_d$ anliegt und zwischen einer ersten eingangsseitigen Anschlussklemme D1 und einer ersten internen Gleichspannungsklemme 7 ein Gleichstrom $i_d$ im Gleichspannungszwischenkreis fließt.

Zwischen den internen Gleichspannungsklemmen 7, 8 verlaufen für jede Phase zwei elektrisch in Reihe geschaltete Phasenzweige 1 bis 6, zwischen denen eine interne Wechselspannungsklemme U, V, W für die jeweilige Phase angeordnet ist. Jede interne Wechselspannungsklemme U, V, W ist mit einer ausgangsseitigen Anschlussklemme U', V', W' über jeweils eine Ausgangsdrossel $L_v$ verbunden. An die ausgangsseitigen (= lastseitigen) Anschlussklemmen U', V', W' ist eine hier nicht dargestellte Last, beispielsweise ein Elektromotor oder ein Energieversorgungsnetz, anschließbar. Diese Last muss nicht zwingend symmetrisch aufgebaut sein.

Der zwischen einer ersten internen Wechselspannungsklemme U und einer ersten ausgangsseitigen Anschlussklemme U' einer ersten Phase fließende Laststrom ist mit $i_{L1}$ bezeichnet, der zwischen einer zweiten internen Wechselspannungsklemme V und einer zweiten ausgangsseitigen Anschlussklemme V' einer zweiten Phase fließende Laststrom ist mit $i_{L2}$ bezeichnet, und der zwischen der dritten internen Wechselspannungsklemme W und der dritten ausgangsseitigen Anschlussklemme W' der dritten Phase fließende Laststrom ist mit $i_{L3}$ bezeichnet.

Jeder Phasenzweig 1 bis 6 umfasst eine Modulanzahl N elektrisch in Reihe geschalteter Stromrichtermodule SM und eine zu diesen Stromrichtermodulen S elektrisch in Reihe geschaltete Zweigdrossel $L_z$. Der in einem Phasenzweig $j \in \{1,...,6\}$ fließende Zweigstrom ist mit $i_{zj}$ bezeichnet. Die Zweigdrosseln $L_z$ einer Phase können dabei magnetisch gekoppelt sein.

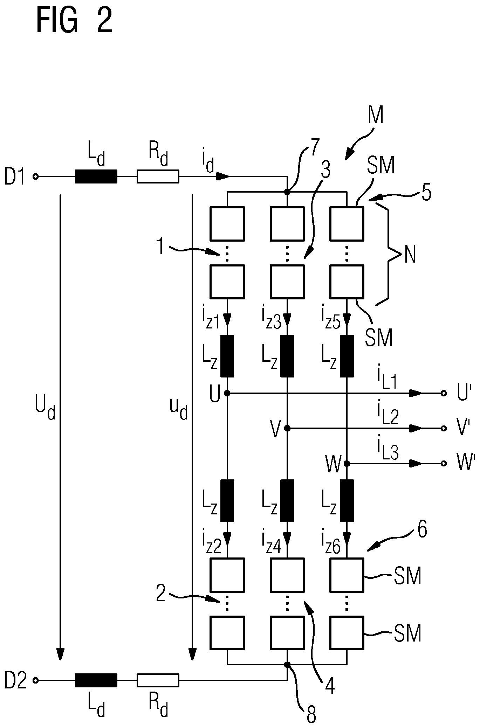

FIG 2 zeigt ein Blockschaltbild eines zweiten Ausführungsbeispiels eines dreiphasigen modularen Multilevelstromrichters M. Dieses Ausführungsbeispiel unterscheidet sich von dem in FIG 1 dargestellten ersten Ausführungsbeispiel lediglich durch den Wegfall der Ausgangsdrosseln $L_v$ zwischen den internen Wechselspannungsklemmen U, V, W und den ausgangsseitigen Anschlussklemmen U', V', W'.

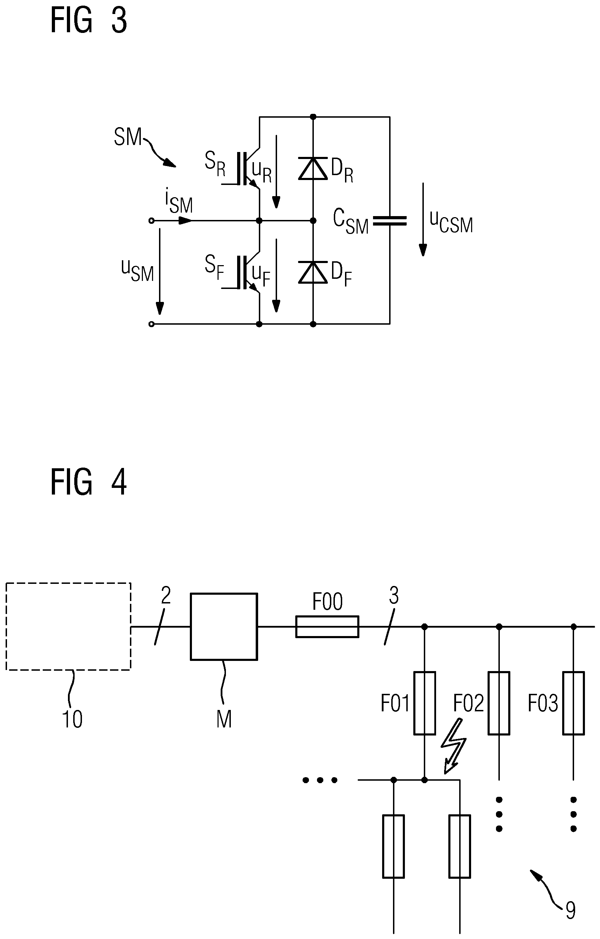

FIG 3 zeigt ein Blockschaltbild einer möglichen Konfiguration eines Stromrichtermoduls SM. Das Stromrichtermodul SM weist eine Halbbrücke zweier elektrisch in Reihe geschalteter abschaltbarer Halbleiterschalter $S_R$ und $S_F$ auf, über die jeweils eine Schalterspannung $u_R$ bzw. $u_F$ abfällt. Die Halbleiterschalter $S_R$, $S_F$ sind beispielsweise als Insulated-Gate-Bipolar-Transistoren (IGBT) ausgebildet, können aber alternativ auch als andere im Handel erhältliche Leistungshalbleiter ausgebildet sein. Jeder abschaltbare Halbleiterschalter $S_R$, $S_F$ weist eine Freilaufdiode $D_R$ bzw. $D_F$ auf, die jeweils zum zugehörigen abschaltbaren Halbleiterschalter $S_R$ bzw. $S_F$ invers elektrisch parallel geschaltet ist. Elektrisch parallel zu der Halbleiterbrücke ist ein kapazitiver Energiespeicher $C_{SM}$ geschaltet, der als ein Kondensator ausgebildet ist oder mehrere Kondensatoren, die elektrisch parallel und/oder in Reihe geschaltet sind, umfasst. Eine erste Modulanschlussklemme des Stromrichtermoduls SM ist mit einem Verbindungspunkt der beiden abschaltbaren Halbleiterschalter $S_R$, $S_F$ verbunden. Eine zweite Modulanschlussklemme des Stromrichtermodul SM ist mit einem Pol des kapazitiven Energiespeichers $C_{SM}$ verbunden. Eine zwischen diesen Modulanschlussklemmen anliegende Modulspannung ist mit $u_{SM}$ bezeichnet, eine über den Energiespeicher $C_{SM}$ abfallende Kondensatorspannung ist mit $u_{csm}$ bezeichnet, ein zwischen der ersten Modulanschlussklemme und dem Verbindungspunkt der beiden abschaltbaren Halbleiterschalter $S_R$, $S_F$ fließender Modulstrom ist mit $i_{SM}$ bezeichnet.

FIG 4 zeigt exemplarisch eine Verwendung eines modularen Multilevelstromrichters M zur Speisung eines dreiphasigen Inselnetzes 9 aus einer Gleichspannungsquelle 10, wobei das Inselnetz 9 mehrere Sicherungen F00 bis F03 aufweist und ansonsten nicht näher dargestellt ist. Angedeutet ist die Situation eines Kurzschlusses nach einer Sicherung F01.

Erfindungsgemäß wird in einem Fehlerfall wie bei dem in FIG 4 angedeuteten dreiphasigen Kurzschluss in der unten näher beschriebenen Weise eine von wenigstens einem Energiespeicher $C_{SM}$ gespeicherte Energie durch eine Regelung und/oder Steuerung wenigstens eines Fehlerstroms beeinflusst, um die erforderliche Speicherkapazität des Energiespeichers $C_{SM}$, d.h. die bei gegebener Nennspannung des Kondensators erforderliche Kondensatorkapazität des Kondensators oder der Kondensatoren des Energiespeicher $C_{SM}$, zu reduzieren. Die erforderliche Speicherkapazität hängt von einer maximal zu erwartenden Energieschwankung $\Delta W_{Max}$ in dem Energiespeicher $C_{SM}$ ab. Für die erforderliche Kondensatorkapazität C gilt

$$C \geq 2 \frac{\Delta W_{Max}}{U_o^2 - U_u^2}, \qquad [1]$$

wobei $U_o$ eine maximal zulässige Kondensatorspannung bezeichnet und $U_u$ eine minimal zulässige Kondensatorspannung bezeichnet. Beide Spannungsgrenzen werden hier vereinfacht als konstant angenommen.

Die (periodische) Energieschwankung $\Delta W$ in einem Energiespeicher $C_{SM}$ ist als Differenz des Maximums und des Minimums über die Zeit der in dem Energiespeicher $C_{SM}$ (periodisch) zu speichernden Energie definiert. Die Energieschwankung $\Delta W$ hängt insbesondere von der Betriebsart des modularen Multilevelstromrichters M (mit oder ohne Kreisströme) und von dem Arbeitspunkt der Last ab.

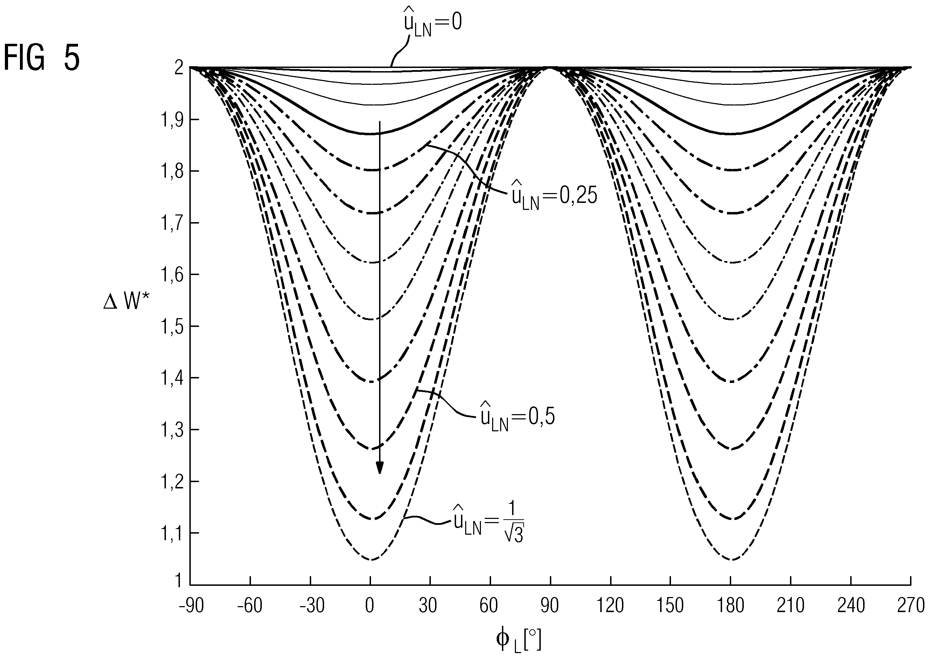

FIG 5 zeigt exemplarisch Verläufe einer normierten Energieschwankung $\Delta W^* = \dfrac{4\omega_0 N \Delta W}{U_d \hat{I}_L}$ in einem Energiespeicher $C_{SM}$ in Abhängigkeit von einem Lastwinkel $\Phi_L$ für verschiedene Werte einer normierten Lastspannung $\hat{u}_{LN} = \dfrac{\hat{U}_{LN}}{U_d}$ bei idealer magnetischer Kopplung der Zweigdrosseln $L_z$ einer Phase, sinusförmiger Aussteuerung der Gleichtaktspannung mit dritter Harmonischer (Third-Harmonic-Injection) und kreisstromfreiem Betrieb des modularen Multilevelstromrichters M, wobei $\omega_0$ eine Grundschwingungskreisfrequenz der Lastspannung, $\hat{I}_L$ einen Effektivwert der Lastspannung und $U_{LN}$ eine Leiter-Sternpunktspannung der Last bezeichnen. Dargestellt sind Verläufe der normierten

$$\hat{u}_{LN} \in \frac{1}{20}\left\{0,1,2,...,11,\frac{20}{3}\sqrt{3}\right\}$$

Energieschwankung $\Delta W^*$ für dreizehn verschiedene Werte der normierten Lastspannung $\hat{u}_{LN}$. Die normierte Energieschwankung $\Delta W^*$ nimmt mit steigender normierter Lastspannung $\hat{u}_{LN}$ ab, wie durch den Pfeil in FIG 5 angedeutet wird. Der Verlauf für den Wert $\hat{u}_{LN} = 0$ gibt die normierte Energieschwankung $\Delta W^*$

im (theoretischen) Betrieb mit einer widerstandslosen Last an, der Wert $\hat{u}_{LN} = 1/\sqrt{3}$ ist der theoretische Maximalwert der normierten Lastspannung $\hat{u}_{LN}$.

Bei dem in FIG 1 dargestellten Ausführungsbeispiel eines Multilevelstromrichters M bewirken die Ausgangsdrosseln $L_v$ einen lastseitigen Spannungsabfall, der insbesondere bei Klemmenkurzschluss an U', V', W' gemäß FIG 5 für eine gezielte Reduzierung der Energieschwankungen $\Delta W$ in den Energiespeichern $C_{SM}$ der Stromrichtermodule SM und damit der in den Energiespeichern $C_{SM}$ gespeicherten Energie verwendet werden kann. Alternativ oder zusätzlich kann die in den Energiespeichern $C_{SM}$ der Stromrichtermodule SM gespeicherte Energie auch durch eine magnetische Verkopplung jeweils der beiden Zweigdrosseln $L_z$ in den beiden Phasenzweigen 1 bis 6 einer Phase beeinflusst werden. In einer weiteren Ausführungsform werden durch Produkte aus den durch diese Drosseln bedingten Spannungsabfällen und Regelung und/oder Steuerung von stromrichterinternen Strömen ("Kreisströmen") die Energieschwankungen $\Delta W$ gezielt beeinflusst.

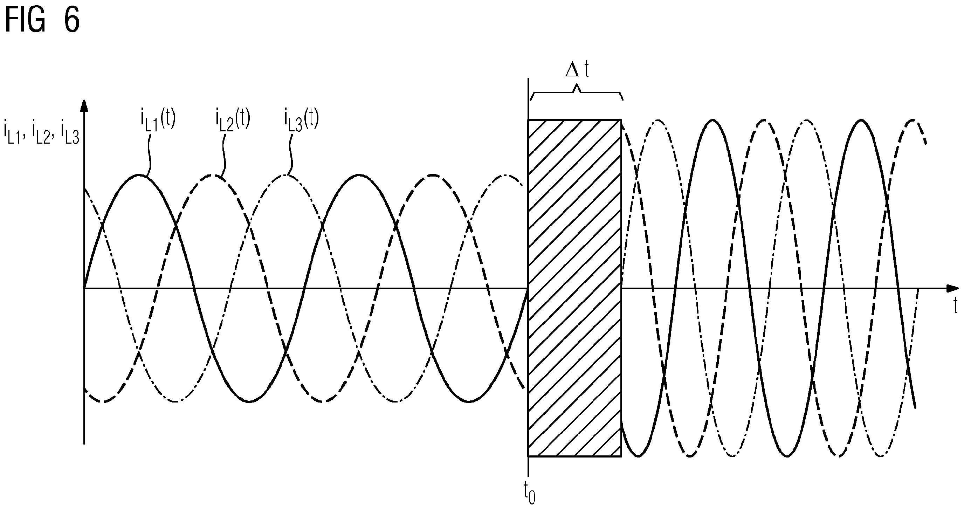

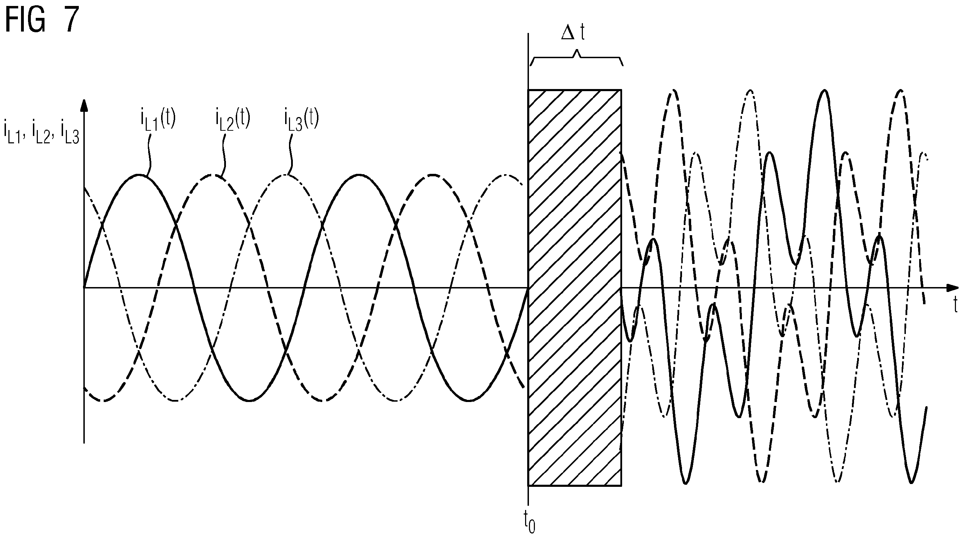

Die Figuren 6 und 7 zeigen anhand von Verläufen von Lastströmen $i_{L1}$ bis $i_{L3}$ in Abhängigkeit von einer Zeit t zwei verschiedene Ausführungsbeispiele einer erfindungsgemäßen Regelung und/oder Steuerung der Lastströme $i_{L1}$ bis $i_{L3}$ eines modularen Multilevelstromrichters M im Fall eines dreiphasigen Kurzschlusses. Dabei tritt der Kurzschluss jeweils zu einem Kurzschlusszeitpunkt $t_0$ ein, nach dem innerhalb eines Zeitintervalls $\Delta t$ die Solltrajektorien der Lastströme $i_{L1}$ bis $i_{L3}$ geändert werden, so dass die Lastströme $i_{L1}$ bis $i_{L3}$ nach dem Zeitintervall $\Delta t$ geeignet geändert sind.

Dabei zeigt FIG 6 ein Ausführungsbeispiel, bei dem die Frequenz und die Amplitude der Lastströme $i_{L1}$ bis $i_{L3}$ gegenüber einem Normalbetrieb vor dem Kurzschlusszeitpunkt $t_0$ jeweils erhöht werden.

FIG 7 zeigt ein Ausführungsbeispiel, bei dem die Stromform der Lastströme $i_{L1}$ bis $i_{L3}$ durch eine Änderung des Frequenzspektrums der Lastströme $i_{L1}$ bis $i_{L3}$ gegenüber dem Normalbetrieb vor dem Kurzschlusszeitpunkt $t_0$ geändert wird, indem dem Frequenzspektrum neben einem Anteil mit der Grundschwingungsfrequenz des Normalbetriebs ein Anteil mit dem Vierfachen der Grundschwingungsfrequenz hinzugefügt wird.

Im Folgenden werden der Erfindung zugrunde liegende Hintergründe und Überlegungen ausgeführt. Bei dem Betrieb eines Multilevelstromrichters M wie beispielsweise an einem Inselnetz 9 gemäß FIG 4 ist es notwendig, dass Fehler erkannt und die Fehlerstellen abgetrennt werden, sodass ein Weiterbetrieb des Inselnetzes 9 möglich ist.

Eine wichtige Kenngröße für das Ansprechen von einer Sicherungsvorrichtung wie beispielsweise einer in FIG 4 dargestellten Sicherung F00 bis F03 ist ein so genanntes Schmelzintegral, das auch als Stromintegral bezeichnet wird und gemäß

$$I_S = \int_{t_{S0}}^{t_{S1}} i(t)^2 dt \qquad [2]$$

definiert ist, wobei $t_{s0}$ einen Zeitpunkt der Anregung einer Sicherung F00 bis F03, $t_{s1}$ einen Zeitpunkt des Ansprechens bzw. Auslösens der Sicherung F00 bis F03 und i einen Fehlerstrom bezeichnen.

Damit bei einem Fehler nach den ausgangsseitigen Anschlussklemmen U', V', W' eines Multilevelstromrichters M Sicherungen F00 bis F03 ansprechen können, werden häufig Mindestwerte für einen zu speisenden Kurzschlussstrom $I_K$ gefordert; z. B. $I_K = 1,3\, I_{L,N}$, wobei $I_{L,N}$ einen Nennstrom der Last bezeichnet. Den geforderten Mindestwerten entsprechen Mindestwerte für den Effektivwert des Kurzschlussstromes, was aus [2] und der Definition des Effektivwerts

$$I_{eff} = \sqrt{\frac{1}{t_2 - t_1} \int_{t_1}^{t_2} i(t)^2 dt} \qquad [3]$$

mit $t_1 = t_{s0}$, $t_2 = t_{s1}$ folgt.

Werden an die Stromform während des Fehlers keine besonderen Anforderungen gestellt, so besteht bei der Festlegung der Stromform - unter Umständen innerhalb festgelegter Grenzen - Wahlfreiheit, sofern die Randbedingung nach dem geforderten Effektivwert des Stromes eingehalten wird. Diese Wahlfreiheit kann dazu verwendet werden, den Kondensatoraufwand des modularen Multilevelstromrichters M zu verringern, wie die folgenden Betrachtungen zeigen.

Für die nachfolgenden Betrachtungen wird die Summe der Klemmenspannungen der Stromrichtermodule SM eines Phasenzweiges $j \in \{1, 2, ..., 6\}$ mit

$$u_{Klj} = \sum_{i=1}^{N} u_{Klj,i} \qquad [4]$$

bezeichnet, wobei $u_{Klj,i}$ die in Figur 4 mit $u_{SM}$ bezeichnete Modulspannung des i.ten Stromrichtermoduls SM des Phasenzweiges j ist. Mit dieser Abkürzung ergibt sich die Summe der Augenblicksleistungen an den Klemmen der Energiespeicher $C_{SM}$ des Phasenzweiges j zu

$$p_{Klj} = u_{Klj} i_{zj} \qquad . \qquad [5]$$

Der Zeitverlauf der in den Energiespeichern $C_{SM}$ des Phasenzweiges j gespeicherten Energie wird durch

$$w_{Klj} = \int_{t_0}^{t} p_{Klj} dt + w_{Klj}(t_0) \qquad [6]$$

beschrieben, wobei $t_0$ hier lediglich eine untere Integrationsgrenze bezeichnet und im Allgemeinen nicht mit dem Kurzschlusszeitpunkt $t_0$ in den Figuren 6 und 7 übereinstimmt. Bei praktischen Systemen wird häufig gefordert, dass die Bauelemente der Stromrichtermodule SM eines Phasenzweiges 1 bis 6 gleichmäßig belastet werden. Eine notwendige Bedingung für eine gleichmäßige Belastung der Stromrichtermodule SM ist die

Übereinstimmung der Kondensatorspannungen $u_{CSM}$ innerhalb eines Phasenzweiges 1 bis 6, bzw.

$$w_{Cj,i} \approx \frac{1}{N} w_{Klj} \qquad , \qquad [7]$$

wobei identische Kapazitätswerte vorausgesetzt werden. Die Bedingung [7] kann z.B. durch Regelung und/oder Steuerung erreicht werden.

Im stationären symmetrischen Betrieb - so auch bei einem stationären Fehler - müssen die Klemmenspannungen der Stromrichtermodule SM eines Phasenzweiges 1 bis 6 im zeitlichen Mittel näherungsweise der Spannung $u_d/2$ entsprechen. Häufig sind die Spannungsabfälle an den Eingangsdrosseln $L_d$ und Eingangswiderständen $R_d$ gering, so dass $U_d \approx u_d$ gilt. Um die weiteren Betrachtungen zu vereinfachen, wird dieser Fall bei idealer magnetischer Kopplung der Zweigdrosseln $L_z$ einer Phase vorausgesetzt, auch wird lediglich der Phasenzweig 1 des modularen Multilevelstromrichters M betrachtet.

Eine Berechnung des Zeitverlaufs der Kondensatorenergie $w_{Cj,i}$ bzw. $w_{Klj}$ setzt Kenntnis der Klemmenspannungen $u_{Kij,i}$ der Stromrichtermodule SM und des Zweigstromes $i_{zj}$ voraus. Ein möglicher Zeitverlauf der Summe der Klemmenspannungen im Phasenzweig 1 wird durch

$$u_{Kl1} = \frac{u_d}{2} - u_{1N} + u_{Z1} \qquad [8]$$

beschrieben, wobei $u_{1N}$ eine Leiter-Sternpunktspannung der ersten Phase und $u_{z1}$ eine Spannungskomponente zur Regelung der stromrichterinternen Ströme und Modulation der Gleichtaktspannung bezeichnen. Der Zeitverlauf für den Zweigstrom $i_{z1}$ wird durch

$$i_{z1} = \frac{1}{3} i_d + \frac{1}{2} i_{L1} \qquad [9]$$

beschrieben. Aus dem Einsetzen von [8], [9], [5] in [6] folgt

$$w_{Klj} = \int_{t_0}^{t}\left(\frac{u_d}{2} - u_{1N} + u_{Z1}\right)\left(\frac{i_d}{3} + \frac{i_{L1}}{2}\right)dt + w_{Klj}(t_0)\ . \qquad [10]$$

Bei vielen Fehlerfällen gilt $u_d/2 \gg u_{1N}$, $u_{Z1}$, $i_{L1} \gg i_d$. Dies motiviert den Zeitverlauf der in den Kondensatoren des Phasenzweiges 1 gespeicherten Energie näherungsweise durch

$$w_{Klj} \approx \frac{U_d}{2}\int_{t_0}^{t}\frac{i_{L1}}{2}dt + w_{Klj}(t_0) \qquad [11]$$

zu beschreiben, wobei $U_d = u_d$ = konstant vorausgesetzt wird. Der Zeitverlauf der Kondensatorenergie eines Stromrichtertermodulkondensators kann durch Einsetzen von [11] in [7] zu

$$w_{Cj,i} \approx \frac{1}{N}\frac{U_d}{2}\int_{t_0}^{t}\frac{i_{L1}}{2}dt + \frac{w_{Klj}(t_0)}{N} \qquad [12]$$

berechnet werden.

Aus [11] bzw. [12] folgt, dass die Form des Laststromes $i_{L1}$ erheblichen Einfluss auf den Zeitverlauf der Kondensatorenergie und damit der Energieschwankung $\Delta W$ im Fehlerfall hat. Aus diesem Grund kann durch geeignete Regelung und/oder Steuerung des Laststromes $i_{L1}$ der Kondensatoraufwand minimiert werden.

Zur Verdeutlichung werden ein durch

$$i_{L1} = \hat{I}_{L1}\sin(\omega_0 t) \qquad [13a]$$

und ein durch

$$i_{L1} = \frac{\hat{I}_{L1}}{1{,}07}\left(\sin(\omega_0 t) + \frac{3}{4}\sin(4\omega_0 t)\right) \qquad [13b]$$

beschriebener Laststrom $i_{L1}$ betrachtet. In beiden Fällen beträgt die Energieschwankung etwa $\Delta W \approx \dfrac{2}{N}\dfrac{U_d \hat{I}_{L1}}{4\omega_0}$, wohingegen der Effektivwert des Stromes [13b] etwa um einen Faktor 1,17 größer als der Effektivwert des Stromes [13a] ist.

In diesem Beispiel kann der Effektivwert des Laststromes $i_{L1}$ bei gleicher Energieschwankung $\Delta W$ also um etwa 17% erhöht werden, bzw. bei gefordertem Effektivwert des Laststromes $i_{L1}$ kann die Energieschwankung in den Energiespeichern $C_{SM}$ und damit der Kondensatoraufwand um ca. 14,4% verringert werden, wenn an Stelle von [13a] ein Stromverlauf gemäß [13b] realisiert wird. Die mögliche Reduktion des Kondensatoraufwandes folgt aus [1], wobei vorausgesetzt wird, dass der Kondensatoraufwand durch die Energieschwankung im Fehlerfall bestimmt ist.

**Patentansprüche**

1. Verfahren zum Betrieb eines modularen Multilevelstromrichters (M), der für jede Phase mehrere elektrisch in Reihe geschaltete Stromrichtermodule (SM) aufweist, die jeweils einen wenigstens einen Kondensator umfassenden Energiespeicher ($C_{SM}$) zur Speicherung elektrischer Energie aufweisen,

wobei in einem Fehlerfall eine von wenigstens einem Energiespeicher ($C_{SM}$) gespeicherte Energie durch eine Regelung und/oder Steuerung wenigstens eines Laststroms ($i_{L1}$ bis $i_{L3}$) einer von dem Fehler betroffenen Phase des Multilevelstromrichters (M) beeinflusst wird,
wobei der Fehlerfall ein lastseitiger Kurzschluss ist,
**dadurch gekennzeichnet, dass** im Fehlerfall eines lastseitigen Kurzschlusses eine Stromform und/oder ein Frequenzspektrum des Laststroms ($i_{L1}$ bis $i_{L3}$) bei einer Regelung und/oder Steuerung des Laststromes geändert werden, wobei der Laststrom ($i_{L1}$ bis $i_{L3}$) eine Form

$$i_{L1} = \frac{\hat{I}_{L1}}{1,07}\left(\sin(\omega_0 t) + \frac{3}{4}\sin(4\omega_0 t)\right)$$

derart aufweist, dass sich eine Energieschwankung in einem Energiespeicher ($C_{SM}$) von

$$\Delta W \approx \frac{2}{N}\frac{U_d \hat{I}_{L1}}{4\omega_0}$$

ergibt,
wobei in den aufgeführten Gleichungen für den Laststrom und die Energieschwankung ein Effektivwert des Laststromes als $\hat{I}_{L1}$, eine Zwischenkreisspannung als $U_d$, eine Grundschwingungskreisfrequenz der Lastspannung als $\omega_0$, und eine Modulanzahl als $N$ ausgewiesen sind.

2. Verfahren nach Anspruch 1,
**dadurch gekennzeichnet, dass** ausgangsseitigen Anschlussklemmen (U',V',W') der Phasen des Multilevelstromrichters (M) jeweils eine Ausgangsdrossel ($L_v$) vorgeschaltet wird und/oder Zweigdrosseln ($L_z$) wenigstens einer Phase des Multilevelstromrichters (M) magnetisch gekoppelt sind.

3. Verfahren nach einem der vorhergehenden Ansprüche,
**dadurch gekennzeichnet, dass** in einem Fehlerfall eine Energieverteilung in den Energiespeichern ($C_{SM}$) der Stromrichtermodule (SM) durch eine Aussteuerung einer Gleichtaktspannung und/oder interner elektrischer Ströme des Multilevelstromrichters (M) beeinflusst wird.

4. Verfahren nach Anspruch 3,
**dadurch gekennzeichnet, dass** im Fehlerfall ein zeitlicher Verlauf der Gleichtaktspannung gegenüber einem Normalbetrieb des Multilevelstromrichters (M) geändert wird.

5. Verfahren nach Anspruch 4,
**dadurch gekennzeichnet, dass** in einem Fehlerfall ein Betragsmaximum der Gleichtaktspannung erhöht wird und/oder eine Periodendauer der Gleichtaktspannung reduziert wird und/oder eine Spannungsform der Gleichtaktspannung geändert wird.

6. Verfahren nach einem der vorhergehenden Ansprüche,
**dadurch gekennzeichnet, dass** in einem Fehlerfall elektrische Energie aus dem Multilevelstromrichter (M) in ein Gleichstromnetz zurückgespeist wird.

7. Verfahren nach Anspruch 6,
**dadurch gekennzeichnet, dass** die elektrische Energie aus dem Multilevelstromrichter (M) periodisch in das Gleichstromnetz zurückgespeist wird.

8. Verfahren nach einem der vorhergehenden Ansprüche,
**dadurch gekennzeichnet, dass** die Stromrichtermodule (SM) in einem Normalbetrieb redundant betrieben werden, so dass je Phasenzweig (1 bis 6) des Multilevelstromrichters (M) immer wenigstens ein Stromrichtermodul (SM) nicht betrieben wird, und dass in einem Fehlerfall bedarfsweise wenigstens ein vorher nicht betriebenes Stromrichtermodul (SM) zur Energiespeicherung zugeschaltet wird.

9. Verfahren nach einem der vorhergehenden Ansprüche,
**dadurch gekennzeichnet, dass** die Stromform des Laststroms ($i_{L1}$ bis $i_{L3}$) durch eine Änderung des Frequenzspektrums geändert wird.

**Claims**

1. Method for operating a modular multilevel power converter (M), which has a number of power converter modules (SM) connected electrically in series for each phase, each of which has an energy store ($C_{SM}$) comprising at least one capacitor for storing electrical energy, wherein in the event of a fault, an energy stored by at least one energy store ($C_{SM}$) is influenced by an open-loop and/or closed-loop control of at least one load current ($i_{L1}$ to $i_{L3}$) of a phase of the multilevel power converter (M) affected by the fault,

   wherein the fault is a load-side short-circuit,
   **characterised in that** in the event of a fault of a load-side short-circuit, a current form and/or a frequency spectrum of the load current ($i_{L1}$ to $i_{L3}$) are changed during an open-loop and/or closed-loop control of the load current, wherein the load current ($i_{L1}$ to $i_{L3}$) has a form

$$i_{L1} = \frac{\hat{I}_{L1}}{1.07}\left(\sin\left(\omega_0 t\right) + \frac{3}{4}\sin\left(4\omega_0 t\right)\right)$$

   such that an energy fluctuation is produced in an energy store ($C_{SM}$) by

$$\triangle W \approx \frac{2}{N}\frac{U_d \hat{I}_{L1}}{4\omega_n}$$

   wherein an effective value of the load current as $\hat{I}_{L1}$, an intermediate circuit voltage as $U_d$, *a* basic oscillation circuit frequency of the load voltage as $\omega_0$, and a number of modules as N are disclosed in the cited equations for the load current and the energy fluctuation.

2. Method according to claim 1,
   **characterised in that** an output choke ($L_v$) is in each case arranged upstream of the output side connection terminals (U', V', W') of the phases of the multilevel power converter (M) and/or branch chokes (Lz) of at least one phase of the multilevel power converter (M) are coupled magnetically.

3. Method according to one of the preceding claims, **characterised in that** in the event of a fault an energy distribution in the energy stores ($C_{SM}$) of the power converter modules (SM) is influenced by a modulation of a common mode voltage and/or internal electrical currents of the multilevel power converter (M).

4. Method according to claim 3,
   **characterised in that** in the event of a fault, a temporal course of the common mode voltage is changed compared with a normal operation of the multilevel power converter (M).

5. Method according to claim 4,
   **characterised in that** in the event of a fault, an absolute maximum of the common mode voltage is increased and/or a period of the common mode voltage is reduced and/or a voltage form of the common mode voltage is changed.

6. Method according to one of the preceding claims, **characterised in that** in the event of a fault, electrical energy is fed back out from the multilevel power converter (M) into a common mode voltage network.

7. Method according to claim 6,
   **characterised in that** the electrical energy is periodically fed back out from the multilevel power converter (M) into the common mode voltage network.

8. Method according to one of the preceding claims, **characterised in that**
   during normal operation the power converter modules (SM) are operated redundantly, so that at least one power converter module (SM) is always not operated per phase branch (1 to 6) of the multilevel power converter (M), and that in the event of a fault, at least one previously not operated power converter module (SM) is connected to the energy store, if necessary.

9. Method according to one of the preceding claims, **characterised in that** the current form of the load current ($i_{L1}$ to $i_{L3}$) is changed by a change in the frequency spectrum.

## Revendications

1. Procédé pour faire fonctionner un convertisseur (M) modulaire multi-étagé, qui a pour chaque phase plusieurs modules (SM) de convertisseur, qui sont montés en série et qui ont chacun pour l'accumulation d'énergie électrique un accumulateur ($C_{SM}$) d'énergie comprenant au moins un condensateur, dans lequel dans un cas de défaillance on influe sur une énergie emmagasinée par au moins un accumulateur ($C_{SM}$) d'énergie par une régulation et/ou par une commande d'au moins un courant ($i_{L1}$ à $i_{L3}$) de charge d'une phase, concernée par la défaillance du convertisseur (M) multi-étagé, dans lequel le cas de défaillance est un court-circuit du côté de la charge,

   **caractérisé en ce que**, dans le cas de défaillance d'un court-circuit du côté de la charge, on modifie une forme du courant et/ou un spectre de fréquence du courant ($i_{L1}$ à $i_{L3}$) de charge lors d'une régulation et/ou d'une commande du courant de charge, le courant ($i_{L1}$ à $i_{L3}$) de charge ayant la forme

$$i_{L1} = \frac{\hat{I}_{L1}}{1,07}\left(\sin(\omega_0 t) + \frac{3}{4}\sin(4\omega_0 t)\right)$$

   de manière à donner une fluctuation d'énergie dans un accumulateur ($C_{sm}$) d'énergie de

$$\Delta W \approx \frac{2}{N}\frac{U_d \hat{I}_{L1}}{4\omega_0}$$

   dans lequel, dans les équations mentionnées pour le courant de charge et la fluctuation d'énergie, une valeur efficace du courant de charge est désignée par $\hat{I}_{L1}$, une tension de circuit intermédiaire par $U_d$, une fréquence d'oscillation fondamentale de la tension de charge par $\omega_0$ et un nombre de modules par N.

2. Procédé suivant la revendication 1,
   **caractérisé en ce que** respectivement une bobine ($L_v$) de sortie est montée en amont de bornes (U', V', W') de connexion du côté de la sortie des phases du convertisseur (M) multi-phasé et/ou **en ce que** des bobines ($L_z$) de dérivation d'au moins une phase du convertisseur (M) multi-étagé sont couplées magnétiquement.

3. Procédé suivant l'une des revendications précédentes, **caractérisé en ce que**, dans un cas de défaillance, on influe sur une répartition de l'énergie dans les accumulateurs ($C_{SM}$) d'énergie des modules (SM) de convertisseur par une commande d'une tension en mode commun et/ou des courants électriques internes du convertisseur (M) multi-étagé.

4. Procédé suivant la revendication 3,
   **caractérisé en ce que** dans le cas d'une défaillance, on modifie une courbe en fonction du temps de la tension en mode commun par rapport à un fonctionnement normal du convertisseur (M) multi-étagé.

5. Procédé suivant la revendication 4,
   **caractérisé en ce que**, dans un cas de défaillance, on augmente un maximum de la valeur absolue de la tension en mode commun et/ou on réduit une durée de la période de la tension en mode commun et/ou on modifie une forme de la tension en mode commun.

6. Procédé suivant l'une des revendications précédentes, **caractérisé en ce que**, dans un cas de défaillance, on retourne de l'énergie électrique du convertisseur (M) multi-étagé à un réseau de courant continu.

**7.** Procédé suivant la revendication 6,
**caractérisé en ce que** l'on retourne l'énergie électrique du convertisseur (M) multi-étagé périodiquement au réseau de courant continu.

**8.** Procédé suivant l'une des revendications précédentes, **caractérisé en ce que** l'on fait fonctionner de manière redondante les modules (SM) de convertisseur dans un fonctionnement normal, de manière à faire fonctionner pour chaque branche (1 à 6) de phase du convertisseur (M) multi-étagé toujours au moins un module (SM) de convertisseur et **en ce que**, dans un cas de défaillance, suivant les besoins, on branche pour l'accumulation d'énergie un module (SM) de convertisseur, qui ne fonctionnait pas jusqu'ici.

**9.** Procédé suivant l'une des revendications précédentes, **caractérisé en ce que** l'on modifie la forme du courant ($i_{L1}$ à $i_{L3}$) de charge par une modification du spectre de fréquence.

FIG 1

# FIG 2

FIG 3

FIG 4

FIG 5

FIG 6

$i_{L1}, i_{L2}, i_{L3}$

$i_{L1}(t)$  $i_{L2}(t)$  $i_{L3}(t)$

$\Delta t$

$t_0$

$t$

EP 2 966 769 B1

17

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140078796 A1

**In der Beschreibung aufgeführte Nicht-Patentliteratur**

- **MERLIN M.M.C. et al.** A New Hybrid Multi-Level Voltage-Source Converter with DC Fault Blocking Capability. *INTERNATIONAL CONFERENCE ON AC AND DC POWER TRANSMISSION,* 19. Oktober 2019